# FASCICULE DE BREVET EUROPEEN

(11) **EP 0 668 849 B1**
(45) Date de publication et mention de la délivrance du brevet: **16.10.1996**
(21) Numéro de dépôt: 94900186.1
(22) Date de dépôt: 10.11.1993
(51) Int. Cl.: C03B 19/10, C03B 17/02, C03C 17/00, G09F 23/00

(54) **PROCEDE DE FABRICATION POUR OBJET PORTEUR DE MESSAGE**
VERFAHREN ZUM HERSTELLEN EINER BERICHTETRÄGER
PROCESS FOR THE MANUFACTURE OF AN OBJECT DISPLAYING A MESSAGE

(30) Priorité: 13.11.1992 FR 9213687
(43) Date de publication de la demande: 30.08.1995
(73) Titulaire: DOMINITZ, Jaques Charles, F-92200 Neuilly-sur-Seine (FR); COUPECHOUX, Jean Régis, F-89130 Toucy (FR)
(72) Inventeur: DOMINITZ, Jaques Charles, F-92200 Neuilly-sur-Seine (FR); COUPECHOUX, Jean Régis, F-89130 Toucy (FR)
(74) Mandataire: Casalonga, Axel
(86) Numéro de dépôt international: FR9301108
(87) Numéro de publication internationale: WO9411316

(56) Documents cités:
- WO-A-80/01684
- BE-A- 679 080
- GB-A- 1 448 080
- US-A- 1 734 965
- US-A- 1 946 879
- US-A- 2 371 213
- US-A- 3 047 409
- US-A- 3 186 812
- US-A- 3 506 421

## Description

La présente invention concerne un procédé de fabrication d'un article porteur message, information, publicité, etc. comportant un corps transparent supportant le message etc.

Dans le domaine de la fabrication de billes en verre comportant à leur intérieur des dessins quelconques, on distingue de façon générale deux catégories de techniques. La première technique, appliquée généralement à la fabrication de billes sans valeur comme par exemple des billes de jeux pour enfants, on mélange le verre, avant la formation de la bille, de façon arbitraire avec un ou plusieurs matériaux de couleurs différentes, souvent également du verre, afin d'obtenir des inclusions colorées à l'intérieur de la bille, qui est souvent en verre incolore.

Cette technique, bien qu'elle soit utilisable pour la fabrication de billes à dessins arbitraires, où elle est tout à fait satisfaisante, ne peut pas être utilisée pour la fabrication de billes comportant un dessin bien défini car le mélange arbitraire du matériau coloré avec le verre de la bille ne permet pas d'obtenir un dessin défini.

Il existe également une autre technique pour la fabrication de billes incorporant un dessin artistique, par exemple en émail, technique qui nécessite la préparation manuelle du dessin en émail par un procédé artistique et onéreux suivie par l'introduction de ce dessin, qui est effectué sur un support en verre, dans du verre fondu afin d'envelopper ce support avec du verre fondu et former ensuite une bille, ou un autre objet.

La présente invention a pour but de créer un procédé de fabrication d'un article porteur de message, information, publicité, etc., comportant un corps transparent supportant le message ou le motif tel que des billes par exemple en verre transparent qui portent à leur intérieur un dessin défini, procédé qui devrait être applicable de façon industrielle pour permettre la fabrication d'un grand nombre de ces articles tels que des billes à un prix négligeable, pour produire par exemple des billes porteuses de publicité, message, ou d'autres informations.

Selon la présente invention, ce but est atteint par un procédé de fabrication d'un article porteur de message, information, publicité, etc., comportant un corps transparent supportant le message ou le motif, caractérisé en ce que ledit message (3) est déposé par transfert sur un support (4) autour duquel on forme le corps transparent (2) de l'article (1), l'application par transfert du message sur le support (4) s'effectuant par transfert en appliquant sur le support (4), un porteur en matière thermodégradable portant le message sous forme imprimée, en émail, etc., l'ensemble étant ensuite cuit pour calciner le matériau thermodégradable et pour fixer le message sur le support.

Le message a des dimensions inférieures aux dimensions de l'article porteur; l'application du message sur ledit support s'effectue de façon manuelle ou automatisée; l'introduction du support, ayant ledit message sur sa surface se fait dans un matériau transparent en état de fusion de façon à envelopper le support avec une quantité suffisante de matériau transparent à l'état fondu pour permettre la formation ultérieure d'un corps transparent qui entoure entièrement ledit support. La formation du corps transparent se fait par formage thermomécanique.

Selon une forme de réalisation préférée de l'invention, l'article porteur message est une bille en verre. Ledit support et le matériau en état de fusion sont avantageusement constitués de verre de la même sorte. L'article porteur message peut aussi constituer un bouchon de carafe, un fond de verre ou un fond d'assiette.

Alternativement, le matériau à l'état fondu, qui constituera ultérieurement la bille, est un verre transparent et le support peut être constitué d'un matériau ayant un comportement de dilatation thermique compatible avec celui dudit verre, tel que le cuivre, l'or, le platine, l'argent, la céramique, la porcelaine émaillée.

L'application du message sur le support peut être effectuée sur l'un ou les deux côtés du support, par transfert.

Selon une forme particulière de la présente invention, le support est constitué de galets de verre convexe aplati sur lequel le message est appliqué en l'état froid des galets.

Les galets peuvent être fabriqués par formation d'un filet de verre qui s'écoule à partir d'un bassin pour verre fondu, et l'application du message peut être effectuée sur le filet en état chaud, après quoi le filet est recouvert de verre formable et coupé en supports ou galets individuels.

Avant l'enveloppement des supports avec le verre en l'état fusionné, les supports sont chauffés à environ 500 à 600°C afin d'obtenir une interface parfaite entre le verre du support et le verre en fusion. Cela peut se réaliser par le déplacement du support dans le four de fusion du verre de l'enveloppe.

L'application du message s'effectue sur le support par transfert en appliquant sur le support un porteur en matière thermodégradable qui porte le message sous forme imprimée, en émail, etc., l'ensemble étant ensuite cuit pour calciner le matériau thermodégradable et pour fixer le message sur le support. L'ensemble sera cuit à une température entre environ 500°C et environ 800°C pour la fixation.

L'introduction du support dans le matériau en état de fusion peut être effectuée manuellement en prenant le support qui a été chauffé préalablement à environ 500 à 600°C, au bout d'un pontil chaud et on le trempe dans la paraison d'où on extrait une quantité de verre suffisante pour former une bille autour du support et en formant la bille par formage manuel.

Selon une autre forme de réalisation de la présente invention, l'introduction du support dans le matériau en état de fusion peut être effectuée par les étapes suivantes: installation d'un élément de guide en céramique à l'intérieur d'un bassin à verre en état de fusion au-dessus et près de son orifice d'écoulement d'un filet, ou en dessous de ce bassin de façon à ce que le filet de verre sortant du bassin s'écoule sur la paroi extérieure dudit guide, introduction des supports à l'intérieur dudit guide de façon à permettre la sortie des supports par l'ouverture inférieure du guide en se couvrant de verre en fusion s'écoulant vers le bas sur la paroi extérieure de l'entonnoir.

Le filet de verre incorporant lesdits supports peut être coupé par des ciseaux de façon à individualiser chaque support avec du matériau en fusion autour de lui.

Alternativement, on peut procéder également de la façon suivante: préparer un filet de verre en état de fusion s'écoulant d'un premier bassin disposé relativement en hauteur; faire passer ledit filet entre deux rouleaux d'aplatissement et/ou d'entraînement; faire passer ledit filet aplati par un ou plusieurs rouleau(x) d'impression, rouleau(x) encreur(s) ou rouleau(x) applicateur(s) d'émail ou par un pistolet projecteur d'émail pour y appliquer le message; passer le filet aplati et porteur de message dans ledit guide en céramique qui est installé dans un second bassin de verre en état de fusion disposé relativement en dessous du premier bassin pour envelopper le filet avec du verre en état de fusion; couper le filet composite, ainsi produit, en morceaux individuels dont chacun incorpore une partie du filet porteur message qui porte un message complet, et former mécaniquement une bille de chacun desdits morceaux.

La formation mécanique des billes peut être effectuée par le passage des quantités individuelles de verre à une température où le verre est encore formable, entre deux vis sans fin et par faire rouler les corps relativement ronds sortant des vis sans fin dans un passage de roulement libre jusqu'au refroidissement des corps en dessous d'une température de durcissement.

La présente invention se réfère également à des articles transparents porteurs de message, d'information, de publicité etc. comportant un corps transparent qui inclut à son intérieur ledit message, information, publicité, etc., article qui est caractérisé par le fait qu'il est fabriqué par un procédé comme décrit ci-dessus.

Finalement l'invention concerne un article transparent porteur de message, information, publicité, etc. comportant un corps transparent qui inclut ledit message, information, publicité, etc., article qui est caractérisé par le fait que le message, etc. se trouve à l'intérieur de l'article dans un état suspendu sans support visible, ou sur un support visible d'une forme, couleur et/ou texture choisie.

L'invention sera maintenant décrite plus en détail en se référant aux dessins dont:
la figure 1 montre une bille selon l'invention qui porte à son intérieur un message apparemment suspendu;
la figure 2 montre un support qui porte le message; avant son introduction dans la bille,
la figure 3 montre une première forme de réalisation du procédé selon la présente invention,
la figure 4 montre un détail de l'appareil pour la formation mécanique des billes,
la figure 5 montre une forme de réalisation alternative de la présente invention,
les figures 6a et 6b montrent des détails de la fabrication des billes selon le procédé illustré en figure 3, et
la figure 7 montre un certain nombre de formes pour le support.

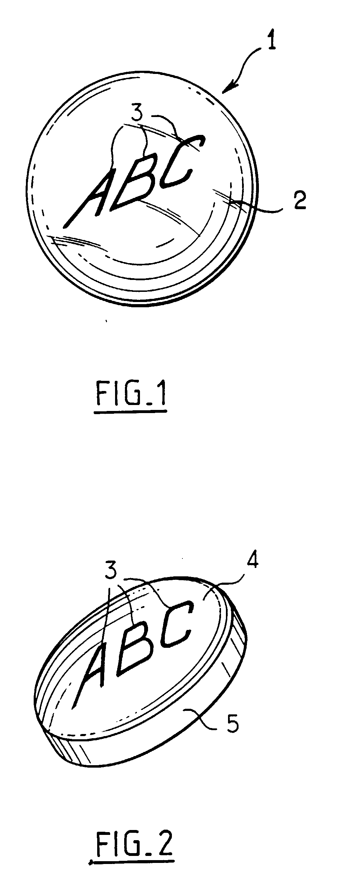

En se référant maintenant aux dessins, la figure 1 montre une bille en verre 2, qui comporte à son intérieur un message 3 qui est représenté par les lettres A,B,C.

La bille représente un article 1 porteur de message qui peut constituer toute information désirée, de la publicité ou n'importe quel autre dessin que l'on souhaite introduire dans une bille transparente. Le mot message comme utilisé dans le reste de ce mémoire descriptif doit être compris comme comportant n'importe quelle information écrite ou dessinée que l'on peut produire par un procédé permettant sa multiplication économique en grand nombre.

La figure 2 montre un galet généralement en forme de disque bombé dont le diamètre est généralement quelque peu inférieur à celui de la bille 2 de la figure 1, étant entendu que ce diamètre peut naturellement être aussi essentiellement identique, plus grand ou considérablement plus petit que celui de la bille 2, selon l'effet optique que l'on souhaite obtenir.

Le disque 4 a une épaisseur 5 qui peut être choisie de façon à permettre un déroulement du procédé de fabrication de la bille 2 sans problème, notamment qui résiste à l'application du message 3 sur la surface du disque 4 et qui prévoit également un support mécanique pour le message 3, support qui doit être suffisamment stable pour assurer l'intégralité du message 3 durant les phases à haute température du procédé selon la présente invention.

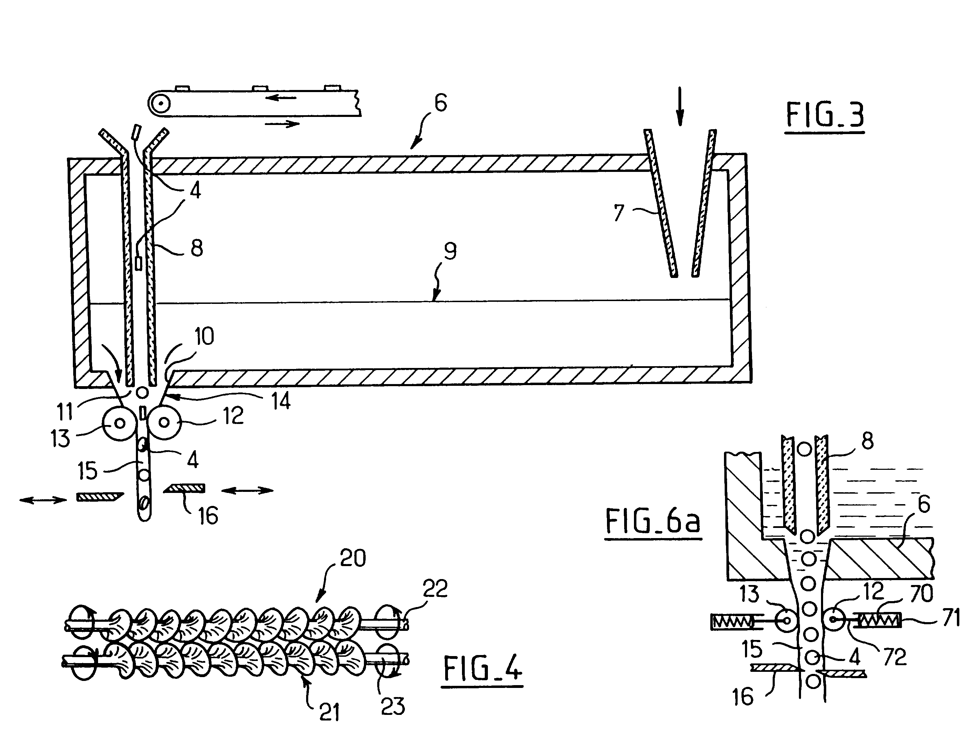

La figure 3 montre un bassin 6 qui est partiellement rempli par une masse de verre 9 en état de fusion qui est couramment appelée paraison.

Ce bassin 6 comporte un premier entonnoir 7 par lequel la matière première comme l'oxyde de silicium est introduite sous forme de sable mélangé avec les autres composants couramment utilisés pour la fabrication de verre, et le bassin 6 comporte également dans sa partie inférieure une ouverture 10 servant à l'écoulement d'un filet de verre fondu dont la fonction sera décrite ultérieurement.

La masse de verre 9 dans le bassin 6 est chauffée à une température d'environ 1200°C par une installation de chauffage classique qui n'est pas représentée dans la figure 3.

Le bassin 6 comporte également un second guide 8 fabriqué, comme l'entonnoir 7 en matière céramique, guide 8 dont l'ouverture supérieure permet l'introduction de disques 4 comme illustrés en figure 2, disques qui peuvent sortir individuellement en bas du guide 8 par son ouverture inférieure 11 qui est située au niveau de l'orifice d'écoulement 10 du fond du bassin 6. La distribution des galets ou disques 4 se fait de manière à introduire dans l'ouverture supérieure du guide 8 les galets individuellement, à des intervalles suffisamment longs pour obtenir que la sortie des billes par l'ouverture intérieure du guide 8 ne soit pas gênée par un encombrement des billes. Elles doivent sortir du guide pratiquement aussitôt qu'elles arrivent au fond du guide pour éviter qu'elles fondent durant un séjour prolongé dans le guide 8.

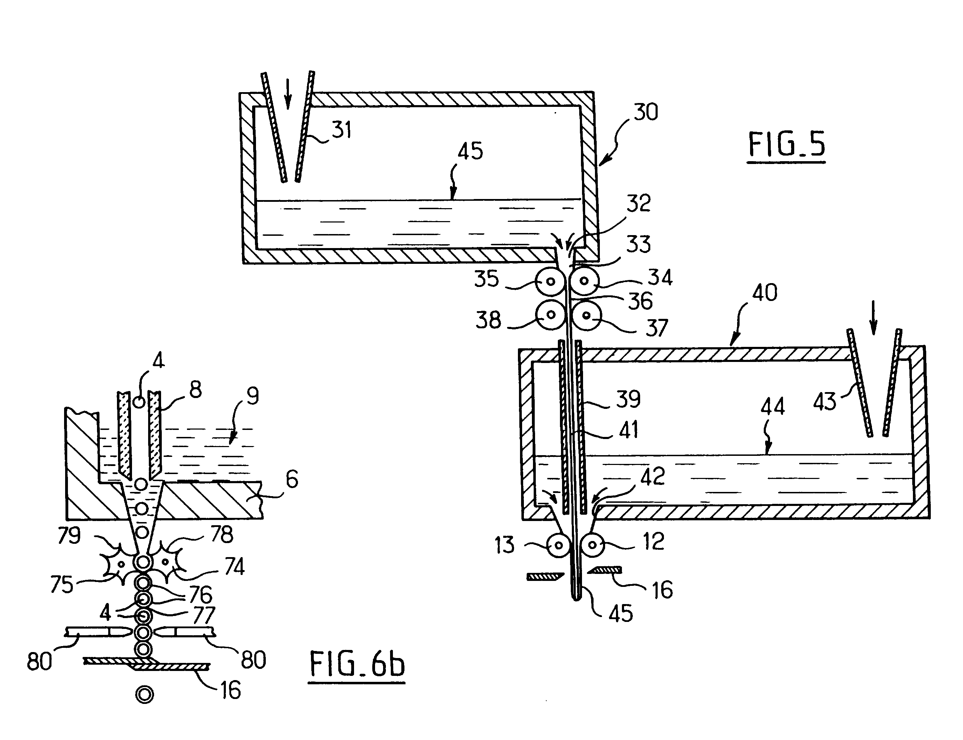

En dessous de l'ouverture 10 du bassin 6 se trouve une paire de rouleaux 12 et 13 par lesquels le filet 14 en verre fondu est saisi pour lui donner une forme plus mince afin de produire un filet 15 comportant en certains intervalles des disques 4. En aval de ces rouleaux 12 et 13, on a prévu des ciseaux 16 par lesquels le filet 15 est sectionné chaque fois entre le passage de deux disques 4 afin de produire des morceaux individuels comportant chacun un disque 4 enveloppé de verre formable. Les détails du traitement du filet 15 seront décrits plus loin en combinaison avec les figures 6a et 6b.

En aval des ciseaux 16, les morceaux individuels du filet 15 tombent ou sont guidés entre deux vis sans fin 20 et 21 qui sont illustrées en figure 4. Les vis sans fin 20 et 21 sont portées par deux axes 22 et 23 qui tournent dans le contresens pour les raisons discutées ci-dessous.

Les disques 4 comme illustrés en figure 2 sont produits par une production de goutte à goutte ou de section d'un filet de verre fondu à partir d'un bassin non illustré, et les gouttes ou les morceaux coupés de filet sont aplatis par un ou deux rouleaux et ensuite refroidis pour former les disques comme illustrés en figure 2. Bien entendu, les disques peuvent être fabriqués par tout autre procédé convenable, pressé, moulé, injecté ou autre.

Ensuite on y applique le message 3 par un procédé de transfert.

L'application du message s'effectue sur le support par transfert en appliquant sur le support un porteur en matière thermodégradable qui porte le message sous forme imprimée, en émail, etc., l'ensemble étant ensuite cuit pour calciner le matériau thermodégradable et pour fixer le message sur le support. L'ensemble sera cuit à une température entre environ 500°C et environ 800°C pour la fixation. Ensuite on introduit les galets dans l'entonnoir 8 du bassin 6 dont ils ressortent par l'ouverture inférieure 11 de façon individuelle en s'enveloppant avec du verre fondu sortant par l'orifice 10 du bassin 6.

La masse de verre fondu qui sort par l'orifice 10 et qui comporte une suite de galets, est formée en filet mince 15 par les deux rouleaux 12 et 13 et la coupe en morceaux individuels du filet 15 entre chaque deux galets 4 produit les quantités de base pour la formation des billes, formation qui sera effectuée par un procédé thermomécanique, c'est-à-dire une formation mécanique à l'état formable du verre qui entoure les galets 4.

Comme illustré dans la figure 4, la distance entre chaque deux spires des deux vis sans fin 20 et 21 correspond environ au diamètre des billes finies, et les morceaux du filet 15 qui sont coupés par les ciseaux 16 tombent entre les deux vis sans fin qui tournent dans un contresens afin de produire une sorte de roulement forcé des morceaux coupés du filet 15, roulement forcé qui donne à ces morceaux une forme de base dont on peut obtenir une sphère.

Ces formes généralement sphériques comportent essentiellement à leur intérieur les galets 4 qui, selon une forme particulière de la présente invention, sont constitués du même verre que la paraison 9, de façon à ce que l'interface entre le corps des galets et le corps du verre l'entourant soit complètement effacée, tel que le message 3 semble être suspendu librement à l'intérieur d'une masse de verre homogène.

Les morceaux déjà généralement sphérique qui sortent des deux vis sans fin 20 et 21 seront encore raffinés dans un guide de roulement libre, pour obtenir une forme et surface plus ou moins parfaites des billes qui en sortent.

Bien entendu, il est possible d'utiliser des galets d'un verre différent ou d'une couleur différente que le verre obtenu de la paraison 9 ou d'un tout autre matériau dont le comportement de dilatation thermique est compatible avec celui du verre de la paraison 9.

Un tel matériau peut être par exemple le cuivre, l'or, le platine, l'argent, la céramique, la porcelaine émaillée et autres.

La figure 5 montre une autre forme de réalisation du procédé de fabrication des billes selon la présente invention, procédé dans lequel on utilise un premier bassin 30 partiellement rempli de verre en état de fusion 45, bassin 30 qui comporte un entonnoir 31 pour l'introduction de la matière première.

Le bassin 30 comporte un orifice d'écoulement 32 par lequel un filet de verre fondu 33 peut sortir de façon à être pris entre deux rouleaux 34 et 35 pour former un filet mince et aplati 36 qui est guidé entre deux rouleaux 37 et 38 dont l'un au moins est exécuté en rouleaux d'impression pour imprimer sur le filet aplati 36 le message que l'on a illustré en figure 2.

Evidemment, la distance réelle entre les paires des rouleaux 34, 35 et 37, 38 est suffisamment longue pour permettre un refroidissement suffisant du filet 36 pour permettre l'application du message par les rouleaux 37 et 38.

Les rouleaux 37 et 38 peuvent être exécutés en rouleaux encreurs, en applicateurs d'émail ou autres. Dans une forme alternative de l'invention, l'application de l'émail peut aussi se faire par un pistolet projecteur d'émail.

Il est également possible de prévoir une première paire de rouleaux d'impression du dessin ou message en relief positif ou négatif, suivie par une deuxième paire de rouleaux applicateurs d'émail, ou par un pistolet projecteur d'émail.

Le filet 41 sort de la paire de rouleaux 37, 38 et est guidé dans un canal 39 en céramique qui est disposé de façon à traverser de haut en bas un deuxième bassin 40 partiellement rempli de verre fondu 44 de façon à ce que l'ouverture inférieure de ce canal 39 s'ouvre au voisinage de l'orifice d'écoulement 42 du bassin 40.

De façon similaire à ce qui a été décrit en référence à la figure 3, le filet aplati et imprimé 41 qui passe par le canal 39 est chargé de verre fondu au niveau de l'ouverture inférieure du canal 39 lorsque le filet 41 en sort afin de passer entre les deux rouleaux 12 et 13 afin de produire un filet composite 45 qui comporte une couche intérieure constituée par le filet 41 ainsi que deux couches de verre fondu de part et d'autre du filet 41.

Ce filet composite continu est sectionné en morceaux par les ciseaux 16 de façon à ce que les points de coupe soient situés entre deux passages de message imprimé sur le filet 41.

La commande des ciseaux 16 peut être effectuée manuellement en surveillant le passage des parties imprimées sur le filet 41 ou par tout moyen automatisé comme par un déclencheur optoélectronique.

Le bassin 40 comporte également un entonnoir 43 pour l'introduction de la matière première pour la fabrication de verre, et les bassins 30 et 40 sont munis d'installations de chauffage non illustrées.

Le figure 6a montre un détail d'une forme de réalisation particulière de la commande pour les ciseaux 16 où l'on a supporté les rouleaux 12 et 13 de façon mobile pour permettre d'appliquer un rétrécissement variable au filet 15 de sorte que le filet 15 devienne plus mince à l'endroit entre deux galets 4 grâce à la force des ressorts 71 qui sont logés dans des cylindres 70 et qui poussent contre des pistons 72 portant les rouleaux 12 et 13.

Lors du passage d'un galet 4 entre les deux rouleaux 12 et 13, ceux-ci sont plus écartés qu'au passage d'une partie du filet 15 comportant du verre fondu uniquement et la commande des ciseaux 16 peut donc s'orienter aux repères qui sont constitués par le diamètre variable du filet 15.

La figure 6b montre un détail du traitement du filet de verre s'écoulant à partir du bassin 6 vers une station de préparation du filet qui est constituée par les deux roues crantées 74 et 75, qui sont situées de part et d'autre du filet de façon à prendre les galets 4 dans leur évidement 78 lors de leur rotation. En aval de ces roues crantées on distingue des parties 76 ayant une forme généralement arrondie et comportant des galets 4, et qui sont séparées l'une de l'autre par des parties minces du filet de verre qui ont été produites par un formage dû aux extrémités 79 des crampons des roues 74 et 75.

De façon non illustrée, l'actionnement des ciseaux peut être commandé par un palpeur qui est situé entre les roues crantées 74, 78 et entre les ciseaux 16, cette commande prenant en compte la distance entre les palpeurs et les ciseaux ainsi que la vitesse du filet entre ces deux éléments.

Entre le palpeur et les ciseaux 16 on a prévu un moyen de réchauffe 80, 80' qui assure que le verre reste suffisamment formable pour la suite du traitement.

Bien évidemment, ce même système de palpeur peut être prévu également pour la commande du ciseau 16 dans la figure 6a, étant entendu que le système de support 70, 71, 72 des rouleaux 12 et 13 peut, lui-même, servir de palpeur.

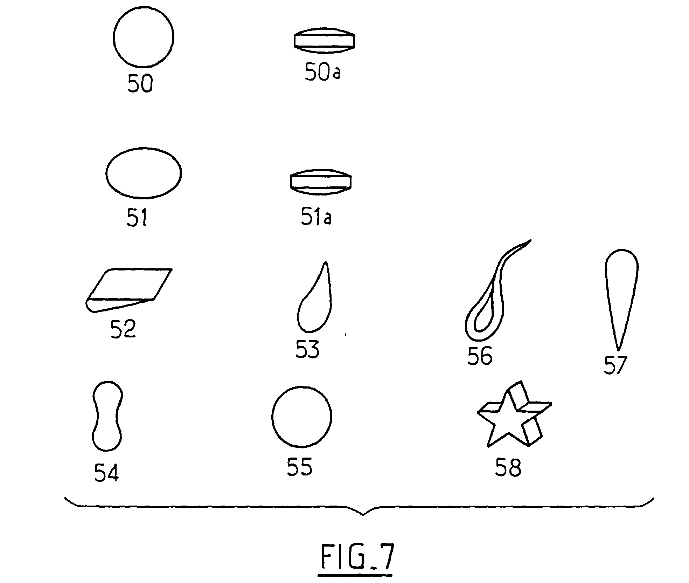

La figure 7 montre un certain nombre de formes possibles pour les galets 4 de la figure 2, la forme la plus simple étant un disque 50 présentant une section légèrement bombée 50a dont soit la surface bombée ou la périphérie cylindrique est destinée à recevoir le message.

Le galet 50, en vue de plan, représente une forme circulaire.

Dans une variante, ce galet peut avoir une forme ovale 51 tout en maintenant une section bombée 51a.

Le galet peut cependant présenter une forme différente suivant des procédés avantageux de fabrication comme par exemple un quartier 52, une goutte d'eau 53, une larme batavique 56, un clou 57, une cacahuète 54, une bille 55, ou toute autre forme complexe profilée comme par exemple une étoile 58.

Lors de l'utilisation d'un galet en verre identique à celui de la paraison qui va entourer ultérieurement le galet, la forme de celui-ci est sans importance car le galet sera complètement confondu dans la masse totale de la bille, un choix particulier de la forme du galet pouvant être cependant souhaitable si on veut donner une disposition particulière au message qui sera suspendu pratiquement dans le vide à l'intérieur de la bille finaliste, ou dans le cas où le galet est fabriqué d'une substance différente, ne serait-ce qu'en couleur, du verre de la paraison pour obtenir un support visible pour le message à l'intérieur de la bille.

L'introduction du galet 60 dans du verre fondu pour former une bille de verre autour de lui produira également soit la disparation optique du galet 60 pour laisser uniquement l'intégralité du message représenté par l'émail 62 à l'intérieur de la bille, message qui donnera l'impression d'être suspendu dans le vide à l'intérieur de la bille.

Evidemment, l'introduction des galets dans la masse de verre fondu pour en former une bille peut être effectuée également de façon manuelle ou l'on prend chaque galet individuellement après qu'il a été chauffé à une température comprise entre 500 et 600°C auparavant, en bout de pontil chaud puis on trempe le galet dans la paraison d'où on extrait une petite quantité de verre suffisante pour former la bille qui sera ensuite finie selon les méthodes classiques.

## Revendications

1. Procédé de fabrication d'un article porteur (1) de message (3), information, publicité, etc. comportant un corps transparent (2) supportant le message ou le motif (3), caractérisé en ce que ledit message (3) est déposé par transfert sur un support (4) autour duquel on forme le corps transparent (2) de l'article (1), l'application par transfert du message sur le support (4) s'effectuant par transfert en appliquant sur le support (4), un porteur en matière thermodégradable portant le message sous forme imprimée, en émail, etc., l'ensemble étant ensuite cuit pour calciner le matériau thermodégradable et pour fixer le message sur le support.

2. Procédé selon la revendication 1, caractérisé en ce que l'ensemble est cuit à une température entre environ 500°C et environ 800°C.

3. Procédé selon l'une des revendications 1 à 2, caractérisé en ce que l'article (1) porteur du message est une bille en verre (2), un bouchon de carafe, un fond de verre ou un fond d'assiette, ou autre.

4. Procédé selon l'une des revendications 1 à 3, caractérisé en ce que ledit support (4) et le corps transparent (2) sont constitués de verre de la même nature.

5. Procédé selon l'une des revendications 1 à 4, caractérisé en ce que ledit corps (2) est constitué d'un verre transparent et le support (4) est constitué d'un matériau ayant un comportement de dilatation thermique compatible avec celui dudit verre, tel que le cuivre, l'or, le platine, l'argent, la céramique, la porcelaine émaillée.

6. Procédé selon l'une quelconque des revendications 1 à 5, caractérisé en ce que le support (4) est constitué de galets de verre (50-58)

7. Procédé selon l'une des revendications 1 à 6, caractérisé en ce qu'il comprend les étapes suivantes:
- préparation d'un support (4) pour le message (3), ayant des dimensions inférieures aux dimensions du corps transparent (2),
- application du message (3) par le procédé de transfert sur le support (4),
- application dudit support (4) ayant ledit message sur sa surface dans un matériau (9) transparent en état de fusion de façon à envelopper le support (4) avec une quantité suffisante du matériau transparent en état fondu pour permettre la formation ultérieure d'un corps transparent qui entoure entièrement ledit support,
- formation du corps transparent (2) par formage thermomécanique.

8. Procédé selon la revendication 7, caractérisé en ce que l'introduction du support (4) dans le matériau en état de fusion est effectuée manuellement en prenant le support, qui a été chauffé manuellement à environ 500°C- 600°C, en bout de pontil chaud, en le trempant dans la paraison d'où l'on extrait une quantité de verre suffisante pour former une bille autour du support en formant la bille par formage mécanique.

9. Procédé selon la revendication 7, caractérisé en ce que l'introduction du support dans le matériau en état de fusion est effectuée par les étapes suivantes :
- installation d'un élément de guide en céramique (8) à l'intérieur d'un bassin (6) à verre en état de fusion au-dessus et près de son orifice d'écoulement (10) d'un filet (14) de verre sortant du bassin (6) s'écoule sur le paroi extérieure dudit élément de guide (8),
- introduction des supports (14) à l'intérieur dudit élément de guide (8) de façon à permettre la sortie des supports (14) par l'ouverture inférieure (11) du guide (8) en se couvrant de verre en fusion (9) s'écoulant vers le bas sur la paroi extérieure de l'élément de guide (8).

10. Procédé selon la revendication 9, caractérisé en ce que le filet (14) de verre incorporant les supports (14), est coupé par des ciseaux (16) de façon à individualiser chaque support avec du matériau en fusion autour de lui.

11. Procédé selon l'une des revendications précédentes, caractérisé en ce que le formage mécanique des billes est effectué par le passage des quantités individuelles de verre, à une température où le verre est encore formable, entre deux vis sans fin (20, 21) et par roulement des corps relativement ronds, sortant des vis sans fin, dans un guide de roulement libre jusqu'au refroidissement des corps en dessous d'une température de durcissement.

## Patentansprüche

1. Herstellungsverfahren für einen Trägerartikel (1) einer Meldung (3), einer Information, einer Werbung, usw., enthaltend einen durchsichtigen Körper (2) zum Halten der Meldung oder des Druckmusters (3), dadurch **gekennzeichnet**, daß die Meldung (3) durch Übertragung auf einen Haltekörper (4) abgeschieden wird, um den der durchsichtige Körper (2) des Artikels (1) gebildet wird, daß das Aufbringen durch Übertragen der Meldung auf dem Halteteil (4) durch Übertragung unter Anwendung auf dem Haltekörper (4) durchgeführt wird, wobei ein Träger aus thermisch abbaubarem Material die Meldung in gedruckter Form, als Emaille, usw. trägt, und daß das Ganze darauf gebrannt wird, um das thermisch abbaubare Material auszuglühen und die Meldung auf dem Träger zu fixieren.

2. Verfahren nach Anspruch 1, dadurch gekennzeichnet, daß die Gesamtheit bei einer Temperatur zwischen ungefähr 500°C und ungefähr 800°C eingebrannt wird.

3. Verfahren nach Anspruch 1 oder 2, dadurch gekennzeichnet, daß der Trägerartikel (1) zum Tragen der Meldung eine Glaskugel (2), ein Karaffenverschluß, ein Glasboden oder ein Tellerboden oder ein anderes Teil ist.

4. Verfahren nach einem der Ansprüche 1 bis 3, dadurch gekennzeichnet, daß der Haltekörper (4) und der durchsichtige Körper (2) aus einem Glas derselben Beschaffenheit gebildet werden.

5. Verfahren nach einem der Ansprüche 1 bis 4, dadurch gekennzeichnet, daß der Körper (2) aus einem durchsichtigen Glas gebildet wird und daß der Haltekörper (4) aus einem Material gebildet wird, das ein Wärmedehnverhalten aufweist, das kompatibel zu demjenigen von Glas ist, sowie zu Kupfer, Gold, Platin, Silber, Keramik, emaillierten Porzellan.

6. Verfahren nach einem der Ansprüche 1 bis 4, dadurch gekennzeichnet, daß der Haltekörper (4) durch Glaskies (50-58) gebildet wird.

7. Verfahren nach einem der Ansprüche 1 bis 6, dadurch gekennzeichnet, daß es die folgenden Schritte enthält:
- Vorbereiten des Haltekörpers (4) für die Meldung (3) mit Abmessungen, die geringer als die Abmessungen des durchsichtigen Körpers (2) sind,
- Aufbringen der Meldung (3) durch das Übertragungsverfahren auf dem Haltekörper (4),
- Aufbringen des Haltekörpers (4) mit der Meldung auf der Oberfläche eines durchsichtigen Materials (9) im geschmolzenen Zustand, derart, daß der Haltekörper (4) mit einer ausreichenden Menge des durchsichtigen Materials im geschmolzenen Zustand so eingeschlossen wird, daß eine nachfolgende Formung des den gesamten Haltekörper umgebenden durchsichtigen Körpers ermöglicht wird;
- Bilden des durchsichtigen Körpers (2) durch thermomechanische Formgebung.

8. Verfahren nach Anspruch 7, dadurch gekennzeichnet, daß das Einführen des Haltekörpers (4) in das im geschmolzenen Zustand vorliegende Material manuell durch Aufgreifen des Haltekörpers durchgeführt wird, der manuell auf ungefähr 500°C bis 600°C am Kopfstück eines Nabeleisens erwärmt wird, sowie durch Eintauchen desselben in den Vorformling, von dem eine für die Bildung einer Kugel um den Haltekörper ausreichende Glasmenge extrahiert wird, unter Bildung der Kugel durch mechanische Formgebung.

9. Verfahren nach Anspruch 7, dadurch gekennzeichnet, daß das Einführen des Haltekörpers gemäß der folgenden Teilstufen durchgeführt wird:
- Befestigen eines keramischen Führungselements (8) im Inneren eines Beckens (6) mit geschmolzenem Glas, und zwar oberhalb und in der Nähe von dessen Auslaßöffnung (10) am Rand (14) des aus dem Becken (6) zu der Seitenwand des Führungselements (8) ausströmenden Glas,
- Einführen der Halteteile (14) in das Innere des Führungselements (8) derart, daß der Austritt der Halteteile (14) über die Innenöffnung (11) der Führung (8) derart ermöglicht wird, daß diese mit geschmolzenem Glas (9) bedeckt werden, das nach unten zu der Seitenwand des Führungselements (8) hin ausströmt.

10. Verfahren nach Anspruch 9, dadurch gekennzeichnet, daß der Rand (14) des Glases mit den Halteteilen (14) mit einer Schere (16) derart geschnitten wird, daß jeder Halteteil mit diesem umgebenden geschmolzenen Material abgetrennt wird.

11. Verfahren nach einem der vorhergehenden Ansprüche, dadurch gekennzeichnet, daß die mechanische Formgebung der Kugeln durchgeführt wird, indem einzelne Glasmengen mit einer Temperatur, bei der das Glas noch formbar ist, zwischen zwei Förderschnecken (20, 21) geführt werden und indem die relativ runden Körper, die am Ende der Förderschnecken austreten, in einem Rollgestell frei solange gerollt werden, bis die Körper unterhalb einer Aushärtetemperatur abgekühlt sind.

## Claims

1. Process for the manufacture of an object (1) carrying a message (3), information, advertising, etc, comprising a transparent body (2) supporting the message or the pattern (3), characterized in that said message (3) is transferred to a support (4) around which the transparent body (2) of the object (1) is formed, the transfer of the message onto the support (4) being effected by applying onto the support (4) a thermodegradable material carrier carrying the message in printed form, in enamel, etc, the combination then being fired to calcinate the thermodegradable material and to fix the message to said support.

2. Process according to claim 1, characterized in that said combination is cured at a temperature between about 500°C and about 800°C.

3. Process according to claim 1 or 2, characterized in that said object (1) carrying said message is a glass ball (2), a carafe stopper, the bottom of a drinking glass or the bottom of a plate, or other.

4. Process according to anyone of claims 1 to 3, characterized in that said support (4) and said transparent body (2) are made of glass of the same kind.

5. Process according to anyone of claims 1 to 4, characterized in that said body (2) is made of a transparent glass and said support (4) is made of a material having thermal expansion properties compatible with those of said glass, such as copper, gold, platinum, silver, ceramic, or enamelled porcelain.

6. Process according to anyone of claims 1 to 5, characterized in that said support (4) is a glass wafer (50-58).

7. Process according to anyone of claims 1 to 6, characterized in that it comprises the, following steps :
- preparation of a support (4) for said message (3) having dimensions less than the dimensions of said transparent body (2),
- application of said message (3) to said support (4) by the transfer method,
- application of said support (4) having said message on its surface into a molten transparent material so as to surround said support (4) with a sufficient quantity of molten transparent material to enable subsequent formation of a transparent body which completely surrounds said support,
- formation of said transparent body (2) by thermomechanical forming.

8. Process according to claim 7, characterized in that introduction of said support (4) into said molten material is effected manually by taking up said support heated manually to about 500°C to about 600°C at the end of a hot spinning rod and dipping it in the gob from which is extracted a sufficient quantity of glass to form a ball around said support and then forming said ball by mechanical forming.

9. Process according to claim 7, characterized in that introduction of said support into said molten material is effected in the following steps :
- installation of a ceramic guiding member (8) inside a pool (6) of molten glass above and near its outflow orifice (10) from which a glass stream (14) flows out of said pool (6) onto the exterior wall of said guiding member (8),
- introduction of said supports (14) into the interior of said guiding member (8) so as to enable said supports (14) to exit the opening (11) at the bottom of said guiding member (8) covered with molten glass (9) flowing down over said outside wall of said guiding member (8).

10. Process according to claim 9, characterized in that said stream (14) of glass incorporating said supports (14) is cut by scissors (16) into separate supports each with molten material around it.

11. Process according to anyone of the preceding claims, characterized in that the balls are formed mechanically by passing individual quantities of glass at a temperature at which said glass can still be formed between two lead screws (20, 21) and by rolling relatively round bodies leaving said lead screws in a free rolling passage until said bodies cool to a temperature below their hardening temperature.
